# EUROPÄISCHE PATENTANMELDUNG

(11) **EP 1 227 614 A2**
(43) Veröffentlichungstag der Anmeldung: **31.07.2002**
(21) Anmeldenummer: 02001667.1
(22) Anmeldetag: 24.01.2002
(51) Int. Cl.: H04L 9/32

(54) **Verfahren für eine Kommunikation zwischen zwei Netzwerk-Teilnehmern**

(30) Priorität: 25.01.2001 DE 10103451
(71) Anmelder: BS Biometric Systems GmbH, 53123 Bonn (DE)
(72) Erfinder: Woop, Marc-Bernd, 53123 Bonn (DE); Baltus, René, 53125 Bonn (DE)
(74) Vertreter: COHAUSZ DAWIDOWICZ HANNIG & PARTNER

(57) **Zusammenfassung**

Die Erfindung betrifft ein Verfahren für eine Kommunikation zwischen zwei Netzwerk-Teilnehmern, die sich gegenseitig Dokumente, insbesondere Anfragen, Aufträge, Überweisungen und/oder Bestätigungen über das Netz zusenden, wobei mindestens einer der Teilnehmer - erster Teilnehmer - eine Handschriftenübertragungsvorrichtung verwendet, die eine Schrift, insbesondere eine Unterschrift in Druckkurven umwandelt, und der zweite Teilnehmer zumindest ein Programm zur Erkennung und Umwandlung der übertragenen Daten der Handschriftenübertragungsvorrichtung verwendet, wobei der zweite Teilnehmer seinem Dokument neben dem Datum und der Zeit zumindest eine Zufallszahl anhängt und dass der erste Teilnehmer seinem Dokument neben den digitalisierten Werten der Schreibdynamik als elektronisches Siegel (elektronische Signatur) weitere Daten anfügt.

## Beschreibung

Die Erfindung betrifft ein Verfahren für eine Kommunikation zwischen zwei Netzwerk-Teilnehmern (z.B. Intra- oder Internet), die sich gegenseitig rechtlich verbindliche Dokumente, insbesondere Anfragen, Aufträge, Überweisungen und/oder Bestätigungen über das Netz zusenden.

Aus dem europäischen Patent 0560356 ist eine Handschriftenübertragungsvorrichtung mit einer Schreibplatte bekannt, die eine auf vier Wägezellen (Drucksensoren) gelagerte Schreibplatte aufweist, die die Schriftdynamik einer Schrift, insbesondere einer Unterschrift, aufnimmt. Aus den gemessenen Druckwerten wird die Stiftposition und der Schreibdruck errechnet.

Aufgabe der Erfindung ist es, das eingangs genannte Verfahren so zu verbessern, dass die Daten der Schrift, insbesondere einer Unterschrift, nach Umwandlung durch die Handschriftenübertragungsvorrichtung in der derselben Weise kein zweites Mal erzeugbar sind.

Diese Aufgabe wird erfindungsgemäß dadurch gelöst, dass der zweite Teilnehmer seinem Dokument mindestens neben dem Datum und der Zeit zumindest eine Zufallszahl anhängt und dass der erste Teilnehmer seinem Dokument neben den digitalisierten Werten der Schreibdynamik als elektronisches Siegel (elektronische Signatur) zumindest eine der beiden folgenden Daten anfügt
- die Zufallszahl des Dokuments weiterer Teilnehmer
- Datum und Zeit des Dokuments weiterer Teilnehmer und darüber hinaus mehrere der folgenden Daten anfügt
- einen öffentlichen Schlüssel, der öffentlich zugänglich ist,
- eine Prüfsumme des Dokuments (Hash-Wert),
- eine eigen erzeugte Zufallszahl,
- Datum und Zeit des eigenen Dokuments,
- Seriennummer und Hochzählwert der Handschriftenübertragungsvorrichtung,
- Prüfnummer der durch die Handschriftenübertragungsvorrichtung erzeugten digitalisierten Werten der Schreibdynamik, insbesondere der Unterschrift des Dokuments des ersten Teilnehmers
wobei die angefügten Daten in verschlüsselter oder unverschlüsselter Form dem Dokument angehängt werden.

Die den Daten der umgewandelten Schrift, insbesondere Unterschrift, angehängten zusätzlichen Daten sorgen dafür, dass die übertragenen Daten nicht nachahmbar, insbesondere kopierbar sind, ohne dass der Empfänger dies sofort erkennt. Schon allein die angehängten Zufallszahlen und Datum und Zeit vom ersten und zweiten Teilnehmer führen dazu, dass die Schrift bzw. Unterschrift jeweils einmalig ist und eine Kopie sofort als eine solche erkannt wird. Damit wird die Übertragung von Schriften, insbesondere Unterschriften, absolut fälschungssicher. Eines Dritten, insbesondere eines Trust-Centers zur Aufbewahrung der Schrift, insbesondere einer Unterschrift, bedarf es hierbei nicht.

Damit kann die Handschriftenübertragungsvorrichtung (Hesy) statt einer Signaturkarte verwendet werden. Während aber eine Signaturkarte personalisiert sein muss, ist dies bei dem erfindungsgemäßen Verfahren nicht erforderlich, sondern mit jeder Schrift bzw. Unterschrift wird etwas einmalig neues und nie Wiederholbares geschaffen. Ferner verhindert das Verfahren, dass die digitalisierten Daten der Schreibdynamik einer Unterschrift kopiert und in ein neues Dokument eingespielt werden.

Die das Verfahren verwendenden Teilnehmer benötigen weder eine Signaturkarte noch ein Trust-Center und können von jedem Ort aus fälschungssichere Schriften, insbesondere Unterschriften, abgeben und übertragen. Hierbei wird zusätzlich zur Signatur, d.h. zum elektronischen Siegel, die überprüfbare Unterschrift mitgesandt. Dabei ist von zusätzlichem Vorteil, dass das erfindungsgemäße Verfahren auch unter Privatpersonen funktioniert, wenn nur einer der beiden Teilnehmer eine Handschriftenübertragungsvorrichtung (Hesy) besitzt.

Besonders vorteilhaft ist es hierbei, wenn dem Dokument des ersten Teilnehmers mehrere Daten des elektronischen Siegels zusätzlich außerhalb des Siegels angefügt werden. Auch ist von Vorteil, wenn das oder die Dokumente vor ihrer Übertragung verschlüsselt werden.

Wenn der erste Teilnehmer zustimmt, wird in einer Datenbank des zweiten Teilnehmers die verschlüsselte Schrift, insbesondere Unterschrift, des ersten Teilnehmers gespeichert ist und zum Vergleich zur Verfügung steht. Hierdurch wird dem zweiten Teilnehmer eine zusätzliche Vergleichsmöglichkeit gegeben.

Ferner ist von Vorteil, wenn die übertragenen Daten der Handschriftenübertragungsvorrichtung verschlüsselt sind. Zusätzlich wird vorgeschlagen, dass die durch die Handschriftenübertragungsvorrichtung umgeformte Schrift, insbesondere Unterschrift der Datenbank eines Trust-Center gespeichert ist. Hierdurch wird eine weitere Sicherheit erzeugt, obwohl diese nicht unbedingt erforderlich ist.

Besonders vorteilhaft ist es, wenn jede Handschriftenübertragungsvorrichtung einmalig ein Schlüsselpaar aus öffentlichem und geheimen Schlüssel erzeugt. Die Schlüssel sind symetrisch oder asymetrisch.

Ferner ist von Vorteil, wenn der erste Teilnehmer das Dokument des zweiten Teilnehmers ausdruckt, auf die Handschriftenübertragungsvorrichtung legt und auf dieser das Dokument unterschreibt.

Vorteilhafte Ausführungsbeispiele der Erfindung werden im folgenden näher beschrieben:

Das erfindungsgemäße Verfahren findet zwischen zwei Teilnehmern in einem Netzwerk, insbesondere im Internet oder Intranet statt, von denen nur ein Teilnehmer, im Ausführungsbeispiel der erste Teilnehmer, eine Handschriftenübertragungsvorrichtung (Hesy) besitzen muss. Hierbei ist der erste Teilnehmer derjenige, der eine Schrift, insbesondere Unterschrift, an einen zweiten überträgt und für den zweiten Teilnehmer sicher sein muss, dass diese nicht kopierbar oder fälschbar ist. Eine solche Kommunikation zwischen zwei Netzwerk-Teilnehmern kann hierbei wie folgt ablaufen:

Der erste Teilnehmer sendet eine Anfrage, insbesondere ohne Verschlüsselung an den zweiten Teilnehmer, um herauszufinden, ob ein von ihm gewünschtes Produkt beim zweiten Teilnehmer besteht. Danach sendet der zweite Teilnehmer ein erstes Dokument, insbesondere ein Formular, an den ersten Teilnehmer, wobei der zweite Teilnehmer diesem Dokument Zusatzinformationen anfügt in Form des aktuellen Datums und/oder der aktuellen Zeit und/oder einer Zufallszahl. Dieses Formular und/oder zumindest die angehängten Zusatzinformationen sind vorzugsweise bereits verschlüsselt.

Der erste Teilnehmer druckt das erste Dokument bei sich auf seinem Drucker aus, legt es auf die Schreibplatte der Handschriftenübertragungsvorrichtung und schreibt auf der Handschriftenübertragungsvorrichtung die Unterschrift unter das Dokument. Alternativ kann das Ausdrucken aber auch fehlen und die Unterschrift allein auf der Handschriftenübertragungsvorrichtung abgegeben und elektronisch an das Dokument angehängt werden.

Nachdem nunmehr das Dokument mit einem oder mehreren digitalisierten Werten der Schreibdynamik versehen ist, werden vom ersten Teilnehmer an das Dokument durch die Software der Handschriftenübertragungsvorrichtung noch mindestens eine der folgenden Daten angehängt:
- einen öffentlichen Schlüssel, der öffentlich zugänglich ist,
- eine Prüfsumme des Dokuments (Hash-Wert),
- eine eigen erzeugte Zufallszahl,
- Datum und Zeit des eigenen Dokuments,
- Seriennummer und Hochzählwert der Handschriftenübertragungsvorrichtung,
- Prüfnummer der durch die Handschriftenübertragungsvorrichtung erzeugten Druckkurven der Schrift, insbesondere der Unterschrift des Dokuments des ersten Teilnehmers

Diese zusätzlichen Daten bilden eine elektronische Signatur bzw. ein elektronisches Siegel, das das Dokument und seine Unterschrift fälschungssicher macht.

Der zweite Teilnehmer muss nicht eine Handschriftenübertragungsvorrichtung besitzen, aber zumindest ein zur Handschriftenübertragungsvorrichtung kompatibles Programm, das das eingehende Dokument überprüfen kann. Somit kann der zweite Teilnehmer die übertragenen Daten auf Echtheit überprüfen durch Benutzung des öffentlichen Schlüssels zur Entschlüsselung, so dass der zweite Teilnehmer erkennen kann, ob das ihm vom ersten Teilnehmer übertragene Dokument mit der Unterschrift zusammengehört.

Hierbei ist von Bedeutung, dass die vom ersten Teilnehmer an das Dokument angehängten Daten verschlüsselbar sind und nur durch den zweiten Teilnehmer entschlüsselbar bzw. überprüfbar sind.

Folgende alternative Verfahren sind ferner beim erfindungsgemäßen Verfahren möglich:
a) Das zu übertragende Dokument wird zusätzlich verschlüsselt.
b) Beim zweiten Teilnehmer liegt eine Datenbank, in der die verschlüsselten Unterschriften der Nutzer gespeichert sind und zum Vergleich bereitstehen.
c) Die vom zweiten Teilnehmer an den ersten Teilnehmer gesandte Bestätigung wird auch mit einer Signatur bzw. einem elektronischen Siegel versehen.
d) Die vom zweiten Teilnehmer an den ersten Teilnehmer gesandte Bestätigung wird zusätzlich mit einer Unterschrift einer Person des zweiten Teilnehmers versehen, die auch durch eine Handschriftenübertragungsvorrichtung der oben genannten Art umgewandelt und verschlüsselt wird.
e) Die von der Handschriftenübertragungsvorrichtung umgewandelte Unterschrift wird zusätzlich verschlüsselt.
f) Die Unterschrift ist in der Originalform und/oder in der von der Handschriftenübertragungsvorrichtung umgewandelten Form in einer Datenbank eines Trust-Centers geheim gespeichert und steht zur Überprüfung, insbesondere zur späteren Überprüfung durch einen Schriftsachverständigen zur Verfügung.

## Patentansprüche

1. Verfahren für eine Kommunikation zwischen zwei Netzwerk-Teilnehmern, die sich gegenseitig Dokumente, insbesondere Anfragen, Aufträge, Überweisungen und/oder Bestätigungen über das Netz zusenden, wobei mindestens einer der Teilnehmer - erster Teilnehmer - eine Handschriftenübertragungsvorrichtung (Hesy) verwendet, die eine Schrift, insbesondere eine Unterschrift in Druckkurven umwandelt, und der zweite Teilnehmer zumindest ein Programm zur Erkennung und Umwandlung der übertragenen Daten der Handschriftenübertragungsvorrichtung (Hesy) verwendet, **dadurch gekennzeichnet, dass** der zweite Teilnehmer seinem Dokument neben dem Datum und der Zeit zumindest eine Zufallszahl anhängt und dass der erste Teilnehmer seinem Dokument neben den digitalisierten Werten der Schreibdynamik als elektronisches Siegel (elektronische Signatur) zumindest eine der beiden folgenden Daten anfügt
- die Zufallszahl des Dokuments weiterer Teilnehmer
- Datum und Zeit des Dokuments weiterer Teilnehmer und darüber hinaus mehrere der folgenden Daten anfügt
- einen öffentlichen Schlüssel, der öffentlich zugänglich ist,
- eine Prüfsumme des Dokuments (Hash-Wert),
- eine eigen erzeugte Zufallszahl,
- Datum und Zeit des eigenen Dokuments,
- Seriennummer und Hochzählwert der Handschriftenübertragungsvorrichtung,
- Prüfnummer der durch die Handschriftenübertragungsvorrichtung erzeugten digitalisierten Werten der Schreibdynamik, insbesondere der Unterschrift des Dokuments des ersten Teilnehmers
wobei die angefügten Daten in verschlüsselter oder unverschlüsselter Form dem Dokument angehängt werden.

2. Verfahren nach Anspruch 1, **dadurch gekennzeichnet, dass** dem Dokument des ersten Teilnehmers mehrere Daten des elektronischen Siegels zusätzlich außerhalb des Siegels angefügt werden.

3. Verfahren nach Anspruch 1 oder 2, **dadurch gekennzeichnet, dass** das oder die Dokumente vor ihrer Übertragung verschlüsselt werden.

4. Verfahren nach einem der vorigen Ansprüche, **dadurch gekennzeichnet, dass** in einer Datenbank des zweiten Teilnehmers die verschlüsselte Schrift, insbesondere Unterschrift, des ersten Teilnehmers gespeichert ist und zum Vergleich zur Verfügung steht.

5. Verfahren nach einem der vorigen Ansprüche, **dadurch gekennzeichnet, dass** die übertragenen Daten der Handschriftenübertragungsvorrichtung verschlüsselt sind.

6. Verfahren nach einem der vorigen Ansprüche, **dadurch gekennzeichnet, dass** die durch die Handschriftenübertragungsvorrichtung umgeformte Schrift, insbesondere Unterschrift in der Datenbank eines Trust-Center gespeichert ist.

7. Verfahren nach einem der vorigen Ansprüche, **dadurch gekennzeichnet, dass** für jede Handschriftenübertragungsvorrichtung einmalig ein öffentlicher Schlüssel und ein privater geheimer Schlüssel erzeugt wird.

8. Verfahren nach einem der vorigen Ansprüche, **dadurch gekennzeichnet, dass** die Schlüssel jeweils symetrisch oder asymetrisch sind.

9. Verfahren nach einem der vorigen Ansprüche, **dadurch gekennzeichnet, dass** der erste Teilnehmer das Dokument des zweiten Teilnehmers ausdruckt, auf die Handschriftenübertragungsvorrichtung legt und auf dieser das Dokument unterschreibt.
